# EUROPEAN PATENT SPECIFICATION

(11) **EP 3 663 038 B1**
(45) Date of publication and mention of the grant of the patent: **14.07.2021**
(21) Application number: 19213677.8
(22) Date of filing: 04.12.2019
(51) Int. Cl.: B23Q 11/08

(54) **EXTENDIBLE PROTECTIVE DEVICE**
TELESKOPISCHE SCHUTZABDECKUNG
DISPOSITIF DE PROTECTION TÉLESCOPQIQUE

(30) Priority: 07.12.2018 IT 201800010883
(43) Date of publication of application: 10.06.2020
(73) Proprietor: P.E.I. Protezioni Elaborazioni Industriali S.r.l., 40012 Calderara di Reno (Bologna) (IT)
(72) Inventor: MARDEGAN, Vittorio, 26037 SAN GIOVANNI IN CROCE (CREMONA) (IT)
(74) Representative: Milli, Simone

(56) References cited:
- DE-A1-102014 113 113
- DE-A1-102016 123 281
- DE-U1-202004 018 318

## Description

This invention relates to a protective device, in particular a protective device of the "plate" type, wherein a succession of panels slidable relative to each other (the above-mentioned "plates") are at least partly superposed to define a protective surface with a variable geometry.

There are prior art extendible protective devices designed to protect specific areas, for example work areas in workshops, defined by a succession of modules connected to each other and slidable towards and away from each other to define a coverage with a variable geometry and/or extension. This variability is made necessary by the needs for access to the area; for this purpose the protective device adopts a "collapsed" or retracted configuration in which it uncovers the area, and an extended configuration in which it covers the area.

The modules of the prior art devices each have an upper protective panel and an anchoring portion, connected below to the upper panel and configured for connecting the module to the adjacent module. The anchoring portion has elastically deformable connecting protrusions configured for the connection to an adjacent module using auxiliary means, in such a way as to make an elastic connection between adjacent modules. DE 10 2016 123281 A1 discloses a protective device according to the preamble of claim 1.

The Applicant has found that solutions of the type described above can be improved mainly in relation to the aspect of scraping between the various slats.

Moreover, the Applicant has found that solutions of the type described above can also be improved in relation to assembly time and complications. According to this latter aspect, it is in effect time consuming to make all the connections of the tabs to the adjacent modules by clamping auxiliary elements (for example, riveted buttons or with an overturned hem), which are often not easily accessible and also require working with the hands in cutting zones (the modules are usually made of sheet metal).

In this context, the technical purpose which forms the basis of the invention is to provide a protective device which overcomes the above-mentioned disadvantages of the prior art.

In particular, the aim of the invention is to provide a protective device which is quick and easy to assemble.

The technical purpose indicated and the aim specified are substantially achieved by a protective device for a processing machine (e.g. a machine tool) with the technical features described in one or more of the appended claims.

The invention is described below with reference to the accompanying drawings, which illustrate a non-limiting embodiment of it, in which:
- Figure 1 is a perspective view of a first embodiment of a protective module of the protective device according to the invention;
- Figure 2 is a perspective view of the module of Figure 1 according to a different observation point;

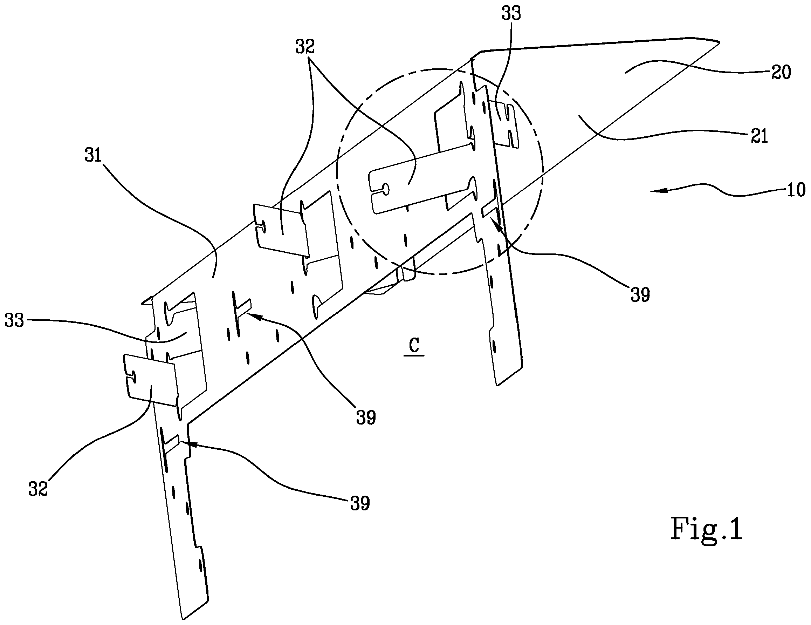

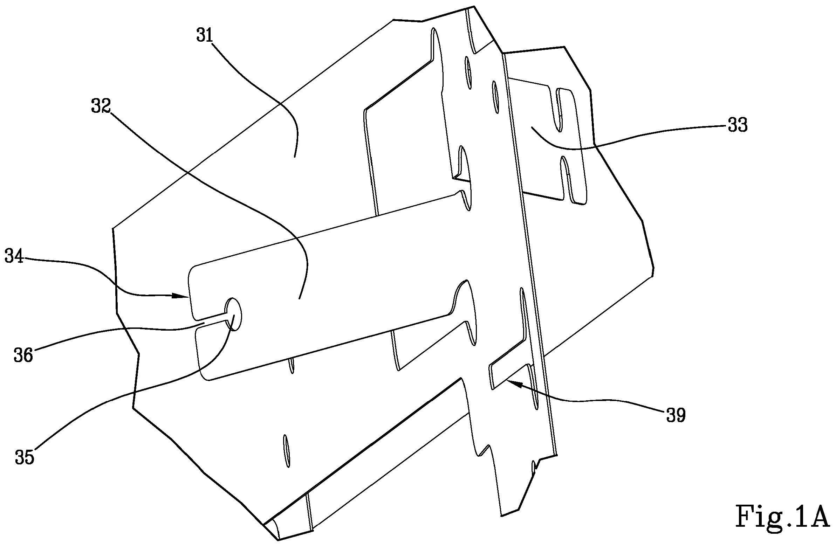

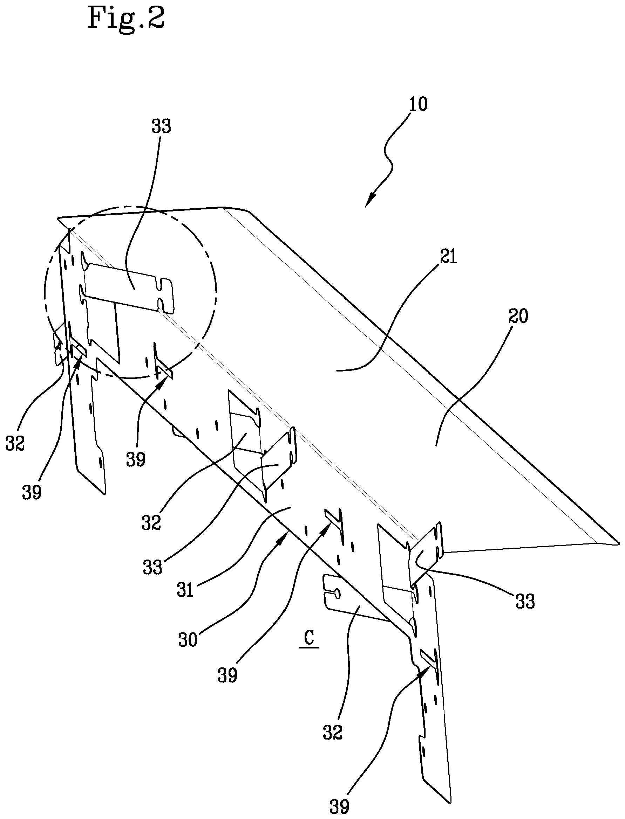

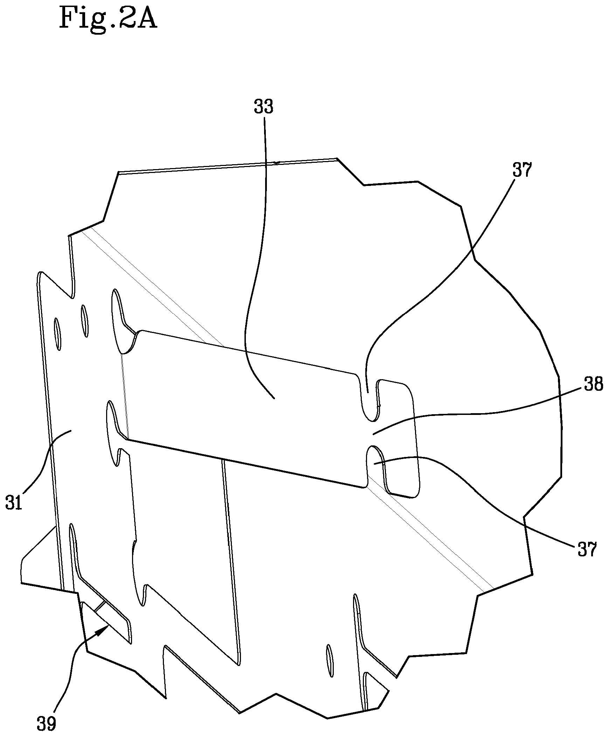

- Figures 1A and 2A are enlarged views of details, respectively, of Figures 1 and 2;

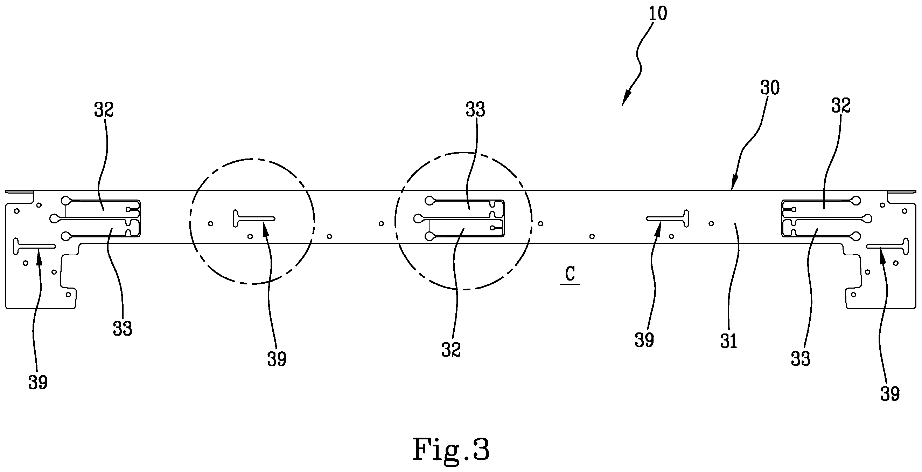

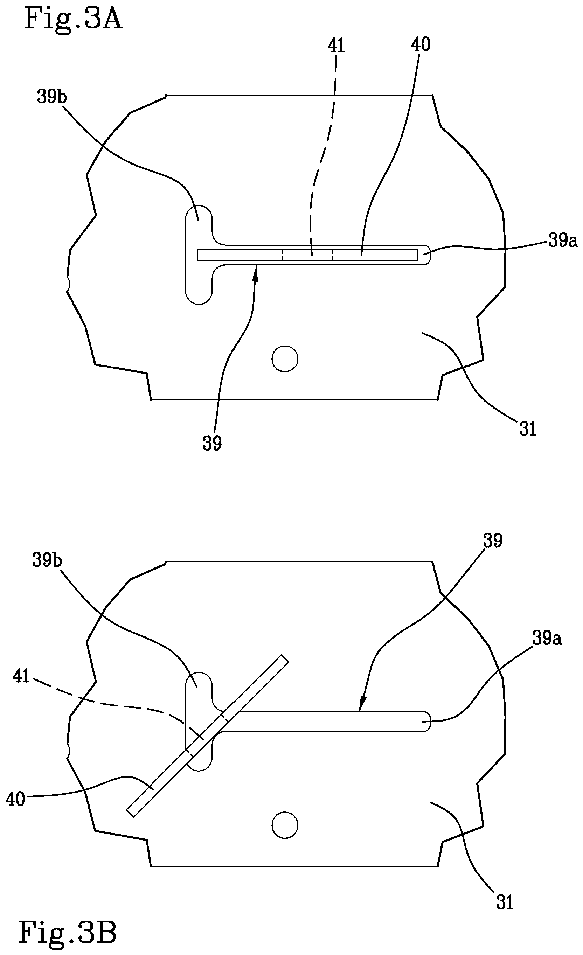

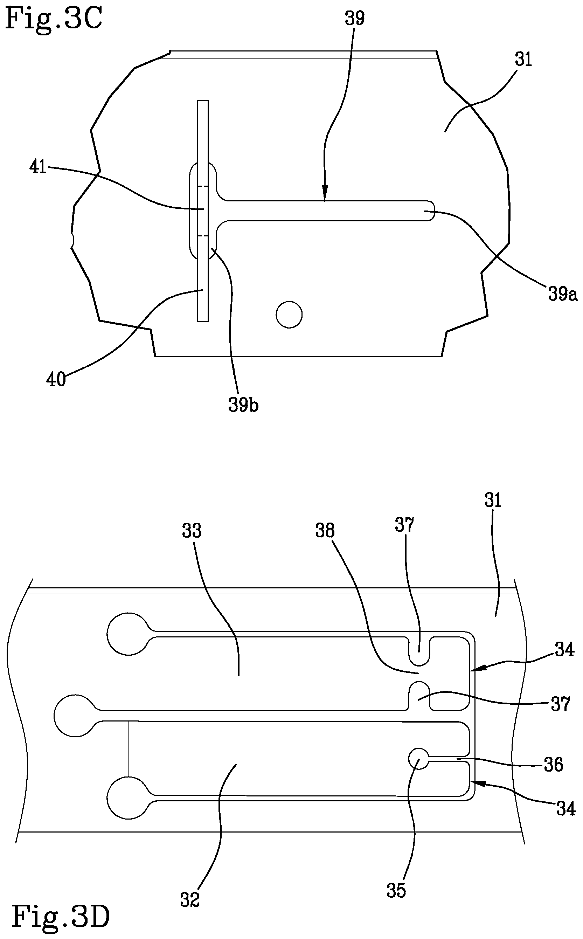

- Figure 3 shows a front view of the module of Figure 1;
- Figures 3A-3C are an enlarged view of a detail of the view of Figure 3 in accordance with three successive points in time of an assembly process;
- Figure 3D is an enlarged view of a further detail of the view of Figure 3;

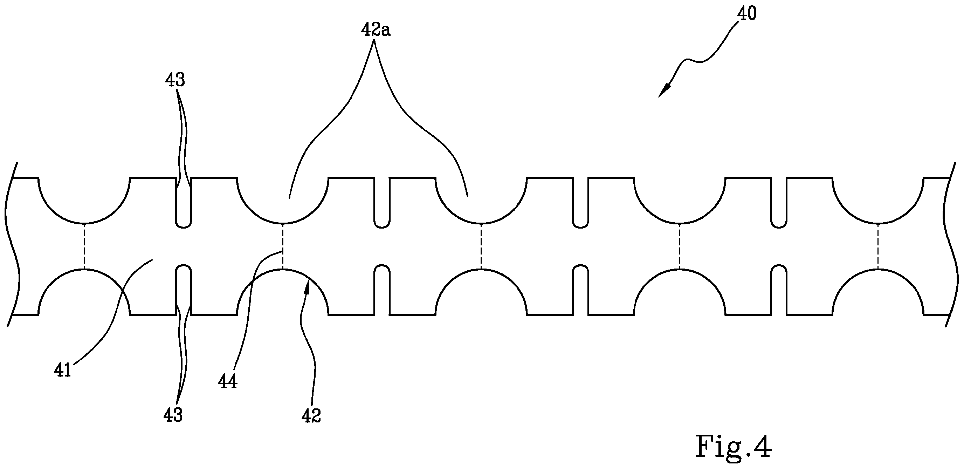

- Figure 4 is a front view of a component of the protective device according to the invention;

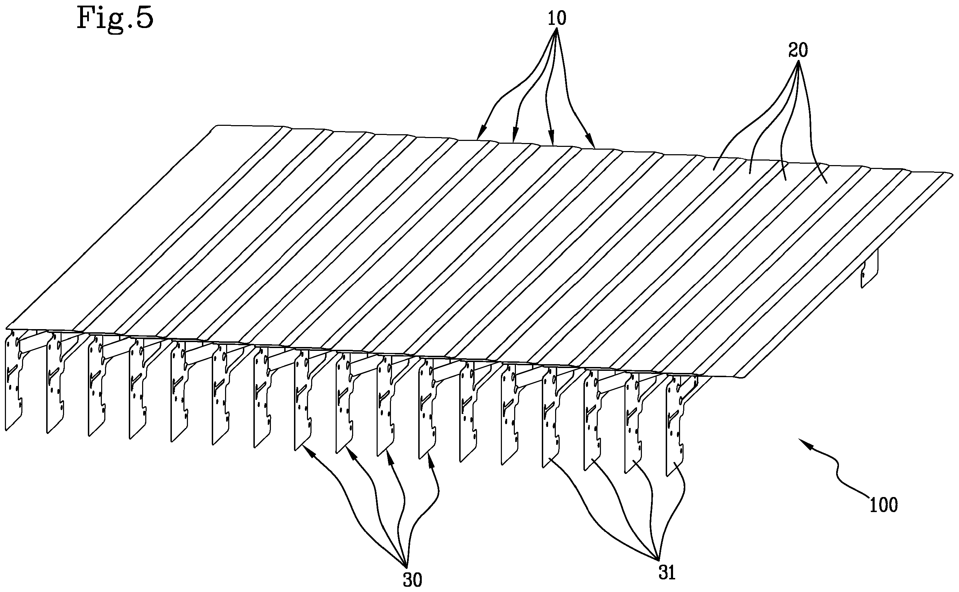

- Figure 5 is a top view of a protective device according to the invention;

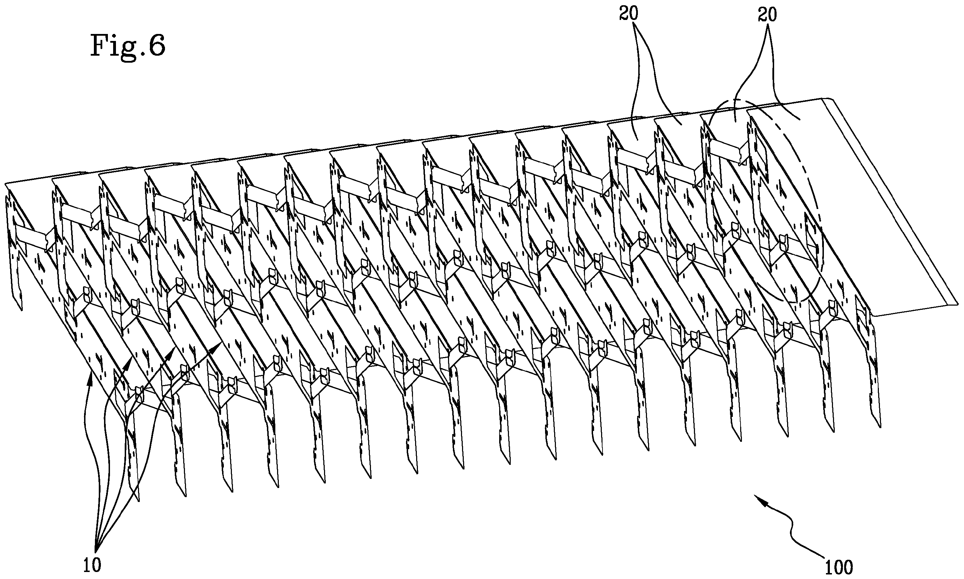

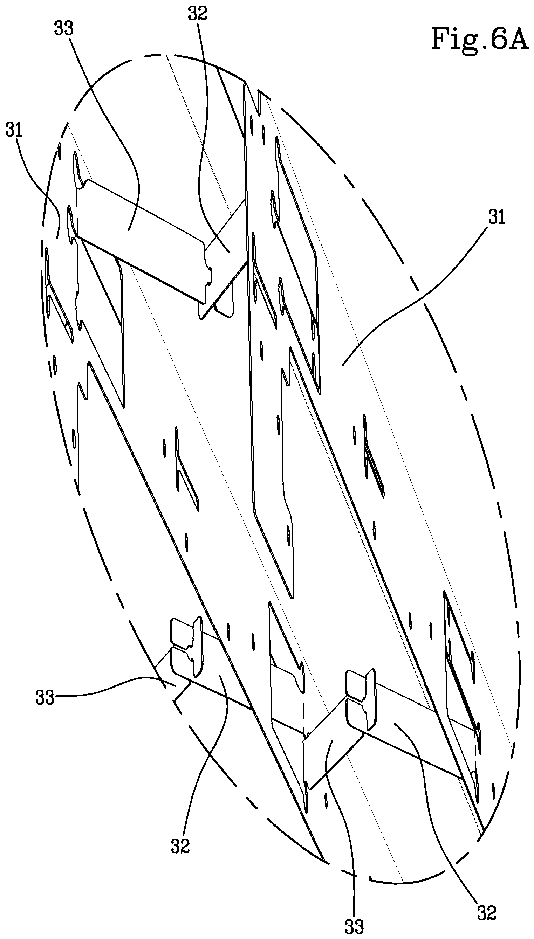

- Figure 6 is a view from below of the protective device of Figure 5;
- Figure 6A is an enlarged view of a detail of the view of Figure 6;

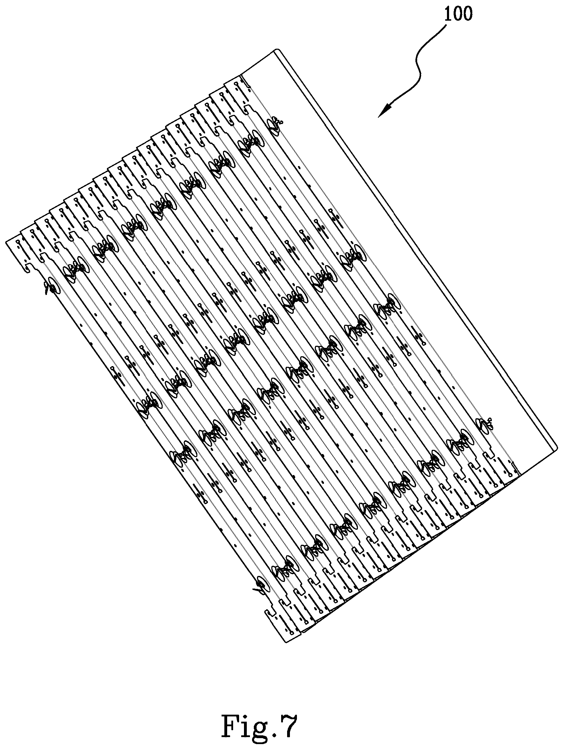

- Figure 7 is a perspective view of a second embodiment of a protective module of the protective device according to the invention;

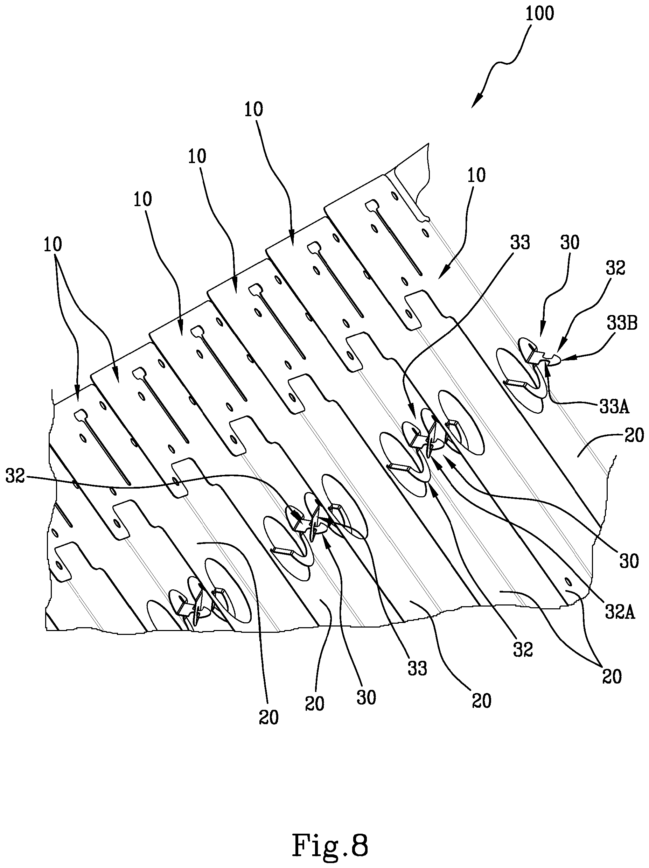

- Figure 8 is a perspective view of a detail of Figure 7.

Described below is a protective device, according to the invention, illustrated in Figures 5 to 6 and hereinafter referred to as protective device 100.

According to one aspect of the invention, the protective device 100 comprises a plurality of protection modules 10.

This description will firstly describe a module 10 of the plurality of modules and, subsequently, the mutual interaction between modules 10 included in the protective device 100 will be illustrated.

The protective module 10 is designed to be used to protect parts of a machine for processing products (for example, a machine tool).

The module 10 basically comprises a protective panel 20, which in the orientation shown in the drawings is an upper panel, and an anchoring portion 30 integral with it.

The protective panel 20 has a main lying surface 21 which is flat or substantially flat and configured to operate in conjunction with at least a corresponding protective panel 20 of an adjacent module 10 for making at least a part of a protective surface extendible and/or with a variable geometry.

The anchoring portion 30 is, on the other hand, configured for connecting the module 10 to an adjacent module 10 or to a pair of adjacent modules 10. In more detail, the anchoring portion 30 has a supporting wall 31 transversal, preferably perpendicular, to the protective panel 20 and also has a plurality of flexible tabs 32, 33 connected to the supporting wall 31 and configured for making an elastic coupling, towards and/or away from, between the module 10 and the adjacent modules 10.

Preferably, and in accordance with the embodiment illustrated in the accompanying drawings, the module 10 has a main direction of extension, along which the protective panel 20 and the supporting wall 31 also extend and which is perpendicular to the direction of reciprocal movement between the modules 10.

According to a preferred embodiment, the module 10 is made (preferably entirely) by means of a metal sheet suitably machined (for example punched, sheared, or cut for example by laser) to define functional and/or structural portions.

Punching has the effect of making, around the tabs 32, 33, separation lines suitable for allowing a deformation of the tabs 32, 33 outside the plane in which the supporting wall 31 lies.

In particular, the protective panel 20 and the supporting wall 31 are delimited by a fold line of the sheet.

Moreover, the protective panel 20 and the supporting wall 31 are preferably perpendicular to each other. Moreover, the tabs 32, 33 are defined by the punching of respective areas of the sheet, and in particular in the zone of the supporting wall 31, along respective open and concave lines, substantially U-shaped. In that way, the tabs 32, 33 are integral with the supporting wall 31 and define protrusions of the latter, being deformable according to movements which can be likened to a rotation about respective ideal hinge lines, defined by the non-punched zones of the tabs 32, 33 coinciding with a first end of the tabs 32, 33.

As shown in Figures 1 and 2, the tabs 32, 33 are positioned in pairs on different zones of the supporting wall 31, for example on three zones, two lateral and one central. Moreover, the tabs 32, 33 of each pair overlap each other, that is to say, they are side by side along a direction perpendicular to the main direction of extension of the supporting wall 31. Advantageously, the two tabs 32, 33 of each pair are positioned with the respective ideal hinge lines on the same side and preferably aligned. Moreover, the respective punching lines of the two tabs 32, 33 of each pair may be at least partly coincident so as to form, between the tabs 32, 33 of each pair, a single separation line, reducing the amount of punching and the production of waste (Figure 3D).

Each tab 32, 33 also has, on a relative second end opposite the first end, a shape 34 configured for making a direct coupling with shape coupling with a corresponding tab 32, 33 of an adjacent module 10.

At least a part of the flexible tabs 32, 33 is a female type tab 32 and the shaping 34 of the respective second end has at least one hole 35 communicating, by means of a slot or notch 36, with a peripheral edge of the tab 32 (in other words, the hole 35 is an open hole) for achieving a transversal insertion of a portion of a tab 33 of an adjacent module 10 in the hole 35 through the slit or notch 36.

The other flexible tabs are male type tabs 33 and each of them has, at the second end, a pair of recesses or seats 37 positioned on opposite sides of the tab 33 spaced from each other by a connecting portion 38 of reduced width. The connecting portion 38 joins a main portion of the tab 33, connected to the supporting wall 31, to a free end portion of the tab 33. In other words, the shaping 34 of the male type tab 33 has the shape of a "T" wherein the rod of the "T" is defined by the above-mentioned connecting portion 38.

The connecting portion 38 has a thickness of sheet metal such that it can be slidably inserted in the slot or notch 36 of the corresponding female type tab 32, so the thickness of the slot or notch 36 is greater than or just greater than the thickness of sheet of the connecting portion 38 (preferably the sheet with which the module 10 is made has a uniform thickness). The supporting wall preferably has a shaping defining a central recess "C" designed to give the supporting wall a substantially U-shaped configuration with the concavity facing in the opposite direction to the protective panel 20. The central recess "C" is designed for coupling with suitable guide means (not illustrated) for the sliding of the module 10 along a linear direction.

The supporting wall 31 also has at least one seat 39 for inserting a limiting element 40 (Figure 4) of minimum and/or maximum distance between the module 10 and an adjacent module 10. The seat 39 has a first portion 39a in the form of an elongate slot preferably rectilinear leading to a second circular or rectilinear portion 39b. According to the embodiment illustrated, the supporting wall has a plurality of the seats 39 (four in number) distributed along a main direction of extension of the supporting wall 31 and with the first portions 39a aligned with each other.

In more detail, the distance limiting element 40 has the shape of a flexible tape.

Preferably, but not necessarily, the flexible tape is made of cloth.

The distance limiting element 40 is preferably defined by an alternating succession of receiving areas 41, designed for coupling with the seats 39 of the supporting walls 31, and deformable areas 42 configured for deforming, folding on themselves when the supporting walls 31 move towards each other.

As shown in Figure 4, the receiving areas 41 are defined by zones with reduced width, defining pairs of shoulders 43 facing each other and designed to be positioned facing towards opposite surfaces of a same supporting wall 31.

The deformable areas 42 are preferably defined by zones with a width progressively decreasing from the above-mentioned shoulders towards an intermediate zone between two consecutive receiving areas 41, to define a variable flexibility (and therefore a geometry of expected deformation) of the distance limiting element 40. The zones with a progressively decreasing width and/or the zones with a reduced width can be made by suitably punching a strip of fabric, in particular by removing lateral portions of the strip (recesses 42a) to locally reduce the width of the strip.

According to the embodiment illustrated, each module 10 has both female type tabs 32 and male type tabs 33, in particular equal in number to each other. However, according to embodiments not illustrated, there may be modules having only female type tabs 32 and other modules having only male type tabs 33. In that case, the above-mentioned modules must be positioned according to an alternating distribution relative to each other.

Figures 5 to 6 show the protective device 100 according to the invention and comprising a succession of modules 10 of the type described above.

The modules 10 are operatively positioned with the relative supporting walls 31 parallel to each other and connected to each other by direct engagement with shape coupling between respective pairs of flexible tabs 32, 33.

As shown in detail in Figure 6 and still better in Figure 6A, the connecting portion 38 of a male type tab 33 is configured to be, in use, inserted in the hole 35 of an adjacent female type tab 32 through the slot or notch 36 in such a way that the connecting portion 38 is fixed in the hole 35, between the main portion and the end portion of the tab 33. In order to achieve this, the connecting portion 38 has a thickness (that is, the sheet thickness) less than the transversal dimension of the slot or notch 36 but a width, in the plane in which the male type tab 33 lies, greater than the transversal dimension of the slit or notch 36.

Advantageously, the flexible tabs 32, 33 are configured in such a way that the above-mentioned direct coupling with shape coupling requires a mutual initial twisting between the two tabs 32, 33 (for example by twisting of only one of the two), the twisting requiring a rotation of approximately 90° of the plane in which the male type tab 33 lies at least at the connecting portion 38, so that it can be inserted through the slot or notch 36 of the female type tab 32. A subsequent direct coupling with shape coupling is therefore possible, in such a way that upon the release of the twisting of the at least one tab 32, 33 the shape coupling is permanent in both directions, both for closing and for opening the protective device 100. The permanent coupling is in any case releasable after applying a further reciprocal twisting between the coupled tabs 32, 33, so as to allow the connecting portion 38 to be inserted again in the slit or notch 36 and therefore disengage from the other tab.

Moreover, even though not illustrated in detail in the overall views of Figures 5 and 6, the distance limiting element 40 is simultaneously engaged with the supporting walls 31 of a plurality of modules 10 in such a way as to allow a mutual moving towards each other of the modules 10 (after an elastic folding of the deformable areas 42, for example at or in the zone of folding lines 44) and also define at least one configuration of maximum moving away between the modules, corresponding to a configuration of maximum extension of the distance limiting element 40.

In more detail, the distance limiting element 40 has a transversal dimension (in a cross-section transversal to its main lying plane) such that it can be inserted simultaneously inside a respective seat 39 of all the supporting walls 31, up to the point wherein the receiving areas 41 of the distance limiting element 40 are positioned exactly inside the seats 39, in particular of the first portions 39a (Figure 3A). Subsequently, the distance limiting element 40 is moved transversely and rotated (Figure 3B) until engaging the receiving areas 41 inside the second portions 39b of the seats 39, making a connection of the lateral walls 31 between pairs of shoulders 43 and therefore a stable connection (with the possibility of removing, for example to allow a replacement in the case of wear) between the distance limiting element 40 and the modules 10 (Figure 3C). Moreover, according to an advantageous aspect of the invention, the flexible tabs 32, 33 have an arrangement divergent to the plane in which the respective supporting wall 31 lies in a non-deformed configuration of the tabs 32, 33, in such a way as to make a elastic preloading of the tabs 32, 33 at least in a configuration of maximum and/or minimum extension of the protective device 100.

The present invention achieves the preset aims, overcoming the disadvantages of the prior art.

The use of elastic tabs equipped with the shapings described above allows a quick and easy execution of the process for assembling the protective device as well as, where necessary, for disassembling. This assembly does not require additional parts and may be made by reducing the execution times, thereby reducing the risks of injuries linked to the contact between the operator and the cutting parts of the sheet modules.

Figures 7 and 8 illustrate a further embodiment of the protective module 10 and of the protective device 100.

The technical aspects, the advantages and the technical and functional features described above are applicable to this embodiment.

According to this embodiment, the flexible tab 32, 33 is shaped in the form of a spiral (preferably circular).

Preferably, with reference to a pair of the modules 10 and flexible tabs 32, 33 designed to couple, it should be noted that the tab 32 of one of the modules 10 is equipped with a male end profile, whilst a tab 33 of another of the modules 10 is equipped with a female profile.

The male profile comprises a narrow portion 33A and an enlarged protrusion.

The female profile comprises a slot 32A designed to receive the narrow portion 33A of the male profile.

As regards the flexible tab (32, 33), it should be noted that the tab may also have other shapes, not illustrated in the accompanying drawings.

## Claims

1. An extendible protective device (100) comprising a plurality of protective modules (10), each module (10) in turn comprising:
- a protective panel (20), having a main lying surface and configured to operate in conjunction with at least one corresponding protective panel (20) of an adjacent module (10) for making at least a part of an extendible protective surface;
- an anchoring portion (30), integral with the protective panel (20) and configured for the connection of the module (10) to the adjacent module (10), the anchoring portion (30) having a supporting wall (31) transversal to the protective panel (20) and a plurality of flexible tabs (32, 33) extending from the supporting wall (31) and configured for making an elastic coupling, towards and/or away, between the module (10) and the adjacent module (10);
wherein each of the flexible tabs (32, 33) has a first end elastically connected to the supporting wall (10) and a second end, opposite the first, **characterised in that** the second end has a shape (34) configured for achieving a direct shaped coupling with a corresponding tab (32, 33) of an adjacent module (10).

2. The device according to claim 1, wherein at least a part of the flexible tabs (32, 33) is a female type tab (32) and the shaping (34) of the respective second end has at least one hole (35) communicating, by means of a slot or notch (36), with a peripheral edge of the tab (32) for achieving a transversal insertion of a corresponding portion of a tab (33) of an adjacent module (10) in the hole (35) through the slit or notch (36).

3. The device according to claim 1 or 2, wherein at least a part of the flexible tabs (32, 33) is a male type tab (33) and the shaping (34) of the respective second end has a pair of recesses or seats (37) positioned on opposite sides of the tab (33) and spaced from each other by a connecting portion (38), the connecting portion (38) joining a main portion of the tab (33), connected to the supporting wall (10), to an end portion of the tab (33); the connecting portion (38) being configured to be, in use, inserted in the hole (35) of an adjacent tab (32) through the slit or notch (36) in such a way that the adjacent tab (32) is fixed between the main portion and the end portion of the tab (33), preferably the end portion of the tab (33) being shaped in the form of a 'T'.

4. The device according to any one of the preceding claims, wherein the tabs (32, 33) are made by means of a sheet and are preferably obtained by punching a sheet defining at least the supporting wall (31).

5. The device according to claim 4 when it depends on claim 2 or 3, wherein the slot or notch (36) has a transversal dimension greater than, or slightly greater than, the thickness of the sheet.

6. The device according to any one of the preceding claims, wherein the supporting wall (31) extends substantially perpendicularly to the protective panel (20) and has at least one pair of elastic tabs (32, 33) which are parallel to each other and adjacent along a direction perpendicular to the protective surface defined by the protective panel (20).

7. The device according to claim 6, wherein the tabs (32, 33) of the at least one pair are oriented with the relative first portion from the same side in such a way as to have ideal hinge lines which are substantially coincident with each other.

8. The device according to claim 6 or 7, wherein the module (10) comprises two or more pairs of tabs (32, 33) located on different portions of the supporting wall (31).

9. The device according to any one of the preceding claims, wherein the module (10) also comprises at least one seat (39) positioned on the supporting wall (31) and having a first portion (39a) in the form of an elongate slot, preferably rectilinear, leading to a second circular or rectilinear portion (39b); preferably, the supporting wall (31) having a plurality of the seats (39) distributed along a main direction of extension of the supporting wall (31) and in particular with the first rectilinear portions (39a) parallel to each other.

10. The device according to any one of the preceding claims, wherein the supporting wall (31) has a central recess (C) designed to impart to the supporting wall (31) a substantially U-shaped configuration with the concavity facing the opposite side of the protective panel (20).

11. The device according to any one of the preceding claims, wherein the flexible tab (32, 33) is shaped like a spiral.

12. The device according to any one of the preceding claims, wherein the modules (10) of the plurality of modules (10) are operatively positioned with the respective supporting walls (31) parallel to each other and connected to each other by direct engagement with shape coupling between respective pairs of flexible tabs (32, 33).

13. The device according to claim 12, wherein the flexible tabs (32, 33) are configured in such a way that the direct engagement with shape coupling requires a reciprocal initial twisting between the two tabs (32, 33) and a subsequent direct engagement with shape coupling, in such a way that upon the release of the reciprocal twisting of the tabs (32, 33) the shape coupling is permanent.

14. The device according to claim 12 or 13, wherein the flexible tabs (32, 33) are made from a sheet and are divided into female type tabs (32) according to claim 2 and male type tabs (33) according to claim 3, pairs of tabs (32, 33) connected to each other comprising a male type tab (33) and a female type tab (32); the direct engagement with shape coupling being made following a twisting of at least one of the tabs (32, 33) of each pair, so as to bring the connecting portion (38) of the male type tab (33) in initial insertion into the slot or notch (36) of the female type tab (32), in particular whilst the connecting portion (38) has a lying plane parallel or substantially parallel to the slot or notch (36), and then housed in the respective hole (35) of the female type tab (32).

15. The device according to any one of claims 12 to 14 and 9, also comprising at least one distance limiting element (40) in the form of a flexible tape, preferably made of cloth, inserted in the at least one seat (39) and configured per simultaneously connected for simultaneously connecting the plurality of the modules (10) in such a way as to allow a moving towards each other of the modules (10) and to define at least one configuration of maximum spacing of the modules (10), corresponding to a configuration of maximum extension of the distance limiting element (40).

16. The device according to any one of claims 12 to 15, wherein the flexible tabs (32, 33) have an arrangement divergent to the plane in which the respective supporting wall (31) lies in a non-deformed configuration of the tabs (32, 33), in such a way as to make a elastic preloading of the tabs (32, 33) at least in a configuration of maximum and/or minimum extension of the protective device (100).

## Patentansprüche

1. Ausziehbare Schutzvorrichtung (100), umfassend eine Vielzahl an Schutzmodulen (10), wobei ein jedes Modul (10) wiederum umfasst:
- eine Schutzplatte (20), die eine Hauptliegefläche aufweist und so ausgebildet ist, dass sie in Verbindung mit mindestens einer entsprechenden Schutzplatte (20) eines benachbarten Moduls (10) arbeitet, um mindestens einen Teil einer ausziehbaren Schutzfläche herzustellen;
- einen Verankerungsabschnitt (30), der mit der Schutzplatte (20) einstückig ist und für die Verbindung des Moduls (10) mit dem benachbarten Modul (10) ausgebildet ist, wobei der Verankerungsabschnitt (30) eine Stützwand (31) quer zur Schutzplatte (20) und eine Vielzahl an flexible Laschen (32, 33) aufweist, die sich von der Stützwand (31) erstrecken und ausgebildet sind, um eine elastische Kopplung zwischen dem Modul (10) und dem benachbarten Modul (10) hin- und/oder wegführend herzustellen;
wobei eine jede der flexiblen Laschen (32, 33) ein erstes Ende, das elastisch mit der Stützwand (10) verbunden ist, und ein zweites Ende gegenüber dem ersten aufweist, **dadurch gekennzeichnet, dass** das zweite Ende eine Form (34) aufweist, die zum Erreichen einer direkten formschlüssigen Kupplung mit einer entsprechenden Lasche (32, 33) eines benachbarten Moduls (10) ausgebildet ist.

2. Vorrichtung nach Anspruch 1, wobei mindestens ein Teil der flexiblen Laschen (32, 33) eine weibliche Lasche (32) ist und die Formgebung (34) des jeweiligen zweiten Endes mindestens ein Loch (35) aufweist, das mittels eines Schlitzes oder einer Kerbe (36) mit einer Umfangskante der Lasche (32) zum Erreichen einer Quereinführung eines entsprechenden Abschnitts einer Lasche (33) eines benachbarten Moduls (10) in das Loch (35) durch den Schlitz oder die Kerbe (36) kommuniziert.

3. Vorrichtung nach Anspruch 1 oder 2, wobei mindestens ein Teil der flexiblen Laschen (32, 33) eine männliche Lasche (33) ist und die Formgebung (34) des jeweiligen zweiten Endes ein Paar von Aussparungen oder Sitzen (37), die auf gegenüberliegenden Seiten der Lasche (33) positioniert und durch einen Verbindungsabschnitt (38) voneinander beabstandet sind, aufweist, wobei der Verbindungsabschnitt (38) einen Hauptabschnitt der Lasche (33), die mit der Stützwand (10) verbunden ist, mit einem Endabschnitt der Lasche (33) zusammenfügt; wobei der Verbindungsabschnitt (38) so ausgebildet ist, dass er im Gebrauch durch den Schlitz oder die Kerbe (36) in das Loch (35) einer benachbarten Lasche (32) eingeführt wird, so dass die benachbarte Lasche (32) zwischen dem Hauptabschnitt und dem Endabschnitt der Lasche (33) fixiert ist, wobei vorzugsweise der Endabschnitt der Lasche (33) in Form eines "T" geformt ist.

4. Vorrichtung nach einem der vorhergehenden Ansprüche, wobei die Laschen (32, 33) mittels eines Blechs hergestellt sind und vorzugsweise durch Stanzen eines Blechs erhalten werden, die mindestens die Stützwand (31) definiert.

5. Vorrichtung nach Anspruch 4, wenn sie von Anspruch 2 oder 3 abhängt, wobei der Schlitz oder die Kerbe (36) eine Querabmessung aufweist, die größer oder geringfügig größer als die Dicke des Blechs ist.

6. Vorrichtung nach einem der vorhergehenden Ansprüche, wobei sich die Stützwand (31) im Wesentlichen senkrecht zur Schutzplatte (20) erstreckt und mindestens ein Paar von elastischen Laschen (32, 33) aufweist, die parallel zueinander verlaufen und entlang einer Richtung senkrecht zu der durch die Schutzplatte (20) definierten Schutzfläche benachbart sind.

7. Vorrichtung nach Anspruch 6, wobei die Laschen (32, 33) des mindestens einen Paares mit dem relativen ersten Abschnitt an derselben Seite so ausgerichtet sind, dass sie ideale Scharnierlinien aufweisen, die im Wesentlichen miteinander übereinstimmen.

8. Vorrichtung nach Anspruch 6 oder 7, wobei das Modul (10) zwei oder mehrere Paare von Laschen (32, 33) umfasst, die an verschiedenen Abschnitten der Stützwand (31) angeordnet sind.

9. Vorrichtung nach einem der vorhergehenden Ansprüche, wobei das Modul (10) auch mindestens einen Sitz (39) umfasst, der an der Stützwand (31) positioniert ist und einen ersten Abschnitt (39a) in Form eines länglichen, vorzugsweise geradlinigen Schlitzes aufweist, der zu einem zweiten kreisförmigen oder geradlinigen Abschnitt (39b) führt; wobei die Stützwand (31) vorzugsweise eine Vielzahl an Sitzen (39) aufweist, die entlang einer Hauptausdehnungsrichtung der Stützwand (31) verteilt sind und insbesondere mit den ersten geradlinigen Abschnitten (39a) parallel zueinander verlaufen.

10. Vorrichtung nach einem der vorhergehenden Ansprüche, wobei die Stützwand (31) eine zentrale Aussparung (C) aufweist, die so ausgelegt ist, dass sie der Stützwand (31) eine im Wesentlichen U-förmige Ausbildung mit der Konkavität, die zur gegenüberliegenden Seite der Schutzplatte (20) zugewandt ist, verleiht.

11. Vorrichtung nach einem der vorhergehenden Ansprüche, wobei die flexible Lasche (32, 33) wie eine Spirale geformt ist.

12. Vorrichtung nach einem der vorhergehenden Ansprüche, wobei die Module (10) der Vielzahl an Modulen (10) betriebswirksam mit den jeweiligen Stützwänden (31) parallel zueinander positioniert und durch direkten formschlüssigen Eingriff zwischen jeweiligen Paaren von flexiblen Laschen (32, 33) miteinander verbunden sind.

13. Vorrichtung nach Anspruch 12, wobei die flexiblen Laschen (32, 33) so ausgebildet sind, dass der direkte formschlüssigen Eingriff eine wechselseitige anfängliche Verdrehung zwischen den beiden Laschen (32, 33) und einen anschließenden direkten formschlüssigen Eingriff erfordert, so dass beim Lösen der wechselseitigen Verdrehung der Laschen (32, 33) die formschlüssige Kupplung dauerhaft ist.

14. Vorrichtung nach Anspruch 12 oder 13, wobei die flexiblen Laschen (32, 33) aus einem Blech hergestellt sind und in weibliche Laschen (32) nach Anspruch 2 und männliche Laschen (33) nach Anspruch 3 unterteilt sind, wobei Paare von miteinander verbundenen Laschen (32, 33) eine männliche Lasche (33) und eine weibliche Lasche (32) umfassen; wobei der direkte formschlüssige Eingriff nach einer Verdrehung von mindestens einer der Laschen (32, 33) eines jeden Paares erfolgt, um den Verbindungsabschnitt (38) der männlichen Lasche (33) in anfänglicher Einführung in den Schlitz oder die Kerbe (36) der weiblichen Lasche (32) zu bringen, insbesondere während der Verbindungsabschnitt (38) eine Liegeebene parallel oder im Wesentlichen parallel zum Schlitz oder zur Kerbe (36) aufweist und um ihn dann in das jeweilige Loch (35) der weiblichen Lasche (32) unterzubringen.

15. Vorrichtung nach einem der Ansprüche 12 bis 14 und 9, umfassend auch mindestens ein Abstandsbegrenzungselement (40) in Form eines flexiblen Bandes, vorzugsweise aus Stoff, das in den mindestens einen Sitz (39) eingeführt und ausgebildet ist, um die Vielzahl an Modulen (10) gleichzeitig so zu verbinden, dass eine Bewegung der Module (10) aufeinander möglich ist und mindestens eine Ausbildung des maximalen Abstands der Module (10) entsprechend einer Ausbildung der maximalen Ausdehnung des Abstandsbegrenzungselements (40) definiert ist.

16. Vorrichtung nach einem der Ansprüche 12 bis 15, wobei die flexiblen Laschen (32, 33) eine Anordnung aufweisen, die von der Ebene abweicht, in der die jeweilige Stützwand (31) in einer nicht verformten Ausbildung der Laschen (32, 33) liegt, so dass eine elastische Vorspannung der Laschen (32, 33) zumindest in einer Ausbildung mit maximaler und/oder minimaler Ausdehnung der Schutzvorrichtung (100) erfolgt.

## Revendications

1. Dispositif de protection extensible (100) comprenant une pluralité de modules de protection (10), chaque module (10) comprenant à son tour :
- un panneau de protection (20) comportant une surface d'appui principale et configuré pour fonctionner conjointement avec au moins un panneau de protection correspondant (20) d'un module adjacent (10) pour réaliser au moins une partie d'une surface de protection extensible ;
- une partie d'ancrage (30), solidaire du panneau de protection (20) et configurée pour le raccordement du module (10) au module adjacent (10), la partie d'ancrage (30) comportant une paroi de support (31) transversale au panneau de protection (20) et une pluralité de languettes flexibles (32, 33) se prolongeant à partir de la paroi de support (31) et configurées pour réaliser un couplage élastique, s'approchant et/ou s'éloignant, entre le module (10) et le module adjacent (10) ;
dans lequel chacune des languettes flexibles (32, 33) comporte une première extrémité reliée de manière élastique à la paroi de support (10) et une seconde extrémité, opposée à la première, **caractérisé en ce que** la seconde extrémité a une forme (34) configurée pour réaliser un couplage de forme directe avec une languette correspondante (32, 33) d'un module adjacent (10).

2. Dispositif selon la revendication 1, dans lequel au moins une partie des languettes flexibles (32, 33) est une languette de type femelle (32) et le façonnage (34) de la seconde extrémité respective comporte au moins un trou (35) communiquant, au moyen d'une fente ou d'une encoche (36), avec un bord périphérique de la languette (32) pour réaliser une insertion transversale d'une partie correspondante d'une languette (33) d'un module adjacent (10) dans le trou (35) à travers la fente ou l'encoche (36).

3. Dispositif selon la revendication 1 ou 2, dans lequel au moins une partie des languettes flexibles (32, 33) est une languette de type mâle (33) et le façonnage (34) de la seconde extrémité respective comporte une paire de renfoncements ou sièges (37) positionnés sur des côtés opposés de la languette (33) et espacés l'un de l'autre par une partie de raccordement (38), la partie de raccordement (38) reliant une partie principale de la languette (33), reliée à la paroi de support (10), à une partie d'extrémité de la languette (33) ; la partie de raccordement (38) étant configurée pour être, lors de son utilisation, insérée dans le trou (35) d'une languette adjacente (32) à travers la fente ou l'encoche (36) de manière à ce que la languette adjacente (32) soit fixée entre la partie principale et la partie d'extrémité de la languette (33), de préférence la partie d'extrémité de la languette (33) étant façonnée en forme de « T ».

4. Dispositif selon l'une quelconque des revendications précédentes, dans lequel les languettes (32, 33) sont réalisées au moyen d'une tôle et sont de préférence obtenues par poinçonnage d'une tôle définissant au moins la paroi de support (31).

5. Dispositif selon la revendication 4 lorsqu'elle dépend de la revendication 2 ou 3, dans lequel la fente ou l'encoche (36) a une dimension transversale supérieure, ou légèrement supérieure, à l'épaisseur de la tôle.

6. Dispositif selon l'une quelconque des revendications précédentes, dans lequel la paroi de support (31) se prolonge substantiellement perpendiculairement au panneau de protection (20) et comporte au moins une paire de languettes élastiques (32, 33) étant parallèles entre elles et adjacentes selon une direction perpendiculaire à la surface de protection définie par le panneau de protection (20).

7. Dispositif selon la revendication 6, dans lequel les languettes (32, 33) de l'au moins une paire sont orientées avec la première partie relative à partir du même côté de manière à avoir des lignes de charnière idéales qui coïncident substantiellement les unes avec les autres.

8. Dispositif selon la revendication 6 ou 7, dans lequel le module (10) comprend deux ou plusieurs paires de languettes (32, 33) situées sur des parties différentes de la paroi de support (31).

9. Dispositif selon l'une quelconque des revendications précédentes, dans lequel le module (10) comprend de plus au moins un siège (39) positionné sur la paroi de support (31) et comportant une première partie (39a) sous la forme d'une fente allongée, de préférence rectiligne, conduisant à une seconde partie circulaire ou rectiligne (39b) ; de préférence, la paroi de support (31) comportant une pluralité de sièges (39) répartis le long d'une direction principale d'extension de la paroi de support (31) et en particulier avec les premières parties rectilignes (39a) parallèles les unes aux autres.

10. Dispositif selon l'une quelconque des revendications précédentes, dans lequel la paroi de support (31) comporte un renfoncement central (C) conçu pour conférer à la paroi de support (31) une configuration substantiellement en forme de « U » avec la concavité faisant face au côté opposé du panneau de protection (20) .

11. Dispositif selon l'une quelconque des revendications précédentes, dans lequel la languette flexible (32, 33) a la forme d'une spirale.

12. Dispositif selon l'une quelconque des revendications précédentes, dans lequel les modules (10) de la pluralité de modules (10) sont positionnés de manière fonctionnelle avec les parois de support (31) respectives parallèles les unes aux autres et reliées les unes aux autres par une mise en prise directe avec un couplage de forme entre des paires respectives de languettes flexibles (32, 33).

13. Dispositif selon la revendication 12, dans lequel les languettes flexibles (32, 33) sont configurées de telle sorte que la mise en prise directe avec un couplage de forme nécessite une torsion initiale réciproque entre les deux languettes (32, 33) et une mise en prise directe ultérieure avec un couplage de forme, de telle sorte que, lors du relâchement de la torsion réciproque des languettes (32, 33), le couplage de forme soit permanent.

14. Dispositif selon la revendication 12 ou 13, dans lequel les languettes flexibles (32, 33) sont réalisées à partir d'une tôle et sont divisées en languettes de type femelle (32) selon la revendication 2 et en languettes de type mâle (33) selon la revendication 3, les paires de languettes (32, 33) reliées réciproquement comprenant une languette de type mâle (33) et une languette de type femelle (32) ; la mise en prise directe avec le couplage de forme étant réalisée à la suite d'une torsion d'au moins une des languettes (32, 33) de chaque paire, de manière à amener la partie de raccordement (38) de la languette de type mâle (33) en insertion initiale dans la fente ou l'encoche (36) de la languette de type femelle (32), en particulier alors que la partie de raccordement (38) a un plan d'appui parallèle ou substantiellement parallèle à la fente ou l'encoche (36), et ensuite logée dans le trou respectif (35) de la languette de type femelle (32).

15. Dispositif selon l'une quelconque des revendications 12 à 14 et 9, comprenant de plus au moins un élément limiteur de distance (40) sous forme d'un ruban souple, de préférence en tissu, introduit dans l'au moins un logement (39) et configuré pour relier simultanément la pluralité des modules (10) de manière à permettre un rapprochement des modules (10) et à définir au moins une configuration d'écartement maximal des modules (10), correspondant à une configuration d'extension maximale de l'élément limiteur de distance (40).

16. Dispositif selon l'une quelconque des revendications 12 à 15, dans lequel les languettes flexibles (32, 33) comportent un agencement divergent du plan dans lequel repose la paroi de support (31) respective dans une configuration non déformée des languettes (32, 33), de manière à réaliser une précharge élastique des languettes (32, 33) au moins dans une configuration d'extension maximale et/ou minimale du dispositif de protection (100).
